## Europäisches Patentamt

## European Patent Office

## Office européen des brevets

(19)

(11) Veröffentlichungsnummer: **0 242 813**

**A2**

(12) **EUROPÄISCHE PATENTANMELDUNG**

(21) Anmeldenummer: **87105702.2**

(22) Anmeldetag: **16.04.87**

(51) Int. Cl.³: **G 01 L 19/00**
**F 16 L 41/00**

(30) Priorität: **18.04.86 DE 3613204**

(43) Veröffentlichungstag der Anmeldung:
**28.10.87 Patentblatt 87/44**

(84) Benannte Vertragsstaaten:
**AT BE CH DE ES FR GB IT LI NL SE**

(71) Anmelder: **HAENNI & CIE MBH**
**Nauheimer Strasse 78-80**
**D-7000 Stuttgart 50(DE)**

(72) Erfinder: **Bacher, Gerhard, Dipl.-Ing.**
**Senefelderstrasse 54**
**D-7302 Ostfildern 1(DE)**

(74) Vertreter: **Patentanwälte Phys. Bartels Dipl.-Ing. Fink**
**Dr.-Ing. Held**
**Lange Strasse 51**
**D-7000 Stuttgart 1(DE)**

(54) **Rohrdruckmittler.**

(57) Der Rohrdruckmittler dient zum Anschließen eines Druckmeßgerätes zum Messen des Druckes eines Fluids, das zum Schonen des Druckmeßgerätes dieses nicht berührt.

Der Rohrdruckmittler weist in einem rohrförmigen Mantel 10 eine Membranhülse 18 mit kreiszylindrischen Endstücken 16 auf, die einen Meßraum für das Fluid von einem Druckraum 25 für eine Druckflüssigkeit abteilt, die den Druck des Fluids auf das Druckmeßgerät überträgt. Die Membranhülse 18 ist mit mindestens einer Rille versehen, die sich über die Länge ihres Membranteiles 21 erstreckt und die Übertragung des Druckes des Fluids auf die Druckflüssigkeit ermöglicht.

Fig.1

EP 0 242 813 A2

# Patentanwälte

European Patent Attorneys

Patentanwälte · Lange Straße 51 · D-7000 Stuttgart 1

UZ4Z813

**Phys. H.Bartels**
**Dipl.-Ing. H.Sibik**
**Dr.-Ing. M.Held**

Zugelassene Vertreter
beim Europäischen Patentamt

**Telefax Nr. (0-711)-228 780**

HAENNI & CIE.MBH., Nauheimer Str. 78-80, 7000 Stuttgart 50

Rohrdruckmittler

Die Erfindung betrifft eine Vorrichtung, an die ein Druckmeßgerät zum Messen des Druckes eines das Druckmeßgerät
nicht berührenden Fluids anschließbar ist und die einen
rohrförmigen Mantel aufweist, dessen Hohlraum mit dem
Druckmeßgerät verbindbar ist und eine unrunde metallische
Membranhülse aufnimmt, deren kreiszylindrischen Endstücke
an die kreiszylindrischen Innenflächen der beiden Endränder des Mantelhohlraumes angepaßt und mit diesen dichtend
verbunden sind, so daß der zwischen den Endstücken befindliche Membranteil der Membranhülse innerhalb des Mantels
einen mit dem Druckmeßgerät verbindbaren Druckraum für
eine Druckflüssigkeit von dem als Meßraum für das Fluid
dienenden Hohlraum der Membranhülse trennt.

Telefon (07 11) 29 63 10 u. 29 72 95    Postscheck Stuttgart (BLZ 600 100 70) 448 42 - 704    Telefonische Auskünfte und Aufträge sind
Telex 7 22 312 (patwa d)

Eine Vorrichtung dieser Art, die auch als "Rohrdruckmittler" bezeichnet wird, ist durch das DE-GM 74 33 978 bekannt. Dadurch, daß der zwischen den Endstücken befindliche Membranteil der Membranhülse bei Rohrdruckmittlern dieser Art einen mit dem Druckmeßgerät verbindbaren Druckraum für eine Druckflüssigkeit von dem als Meßraum für das Fluid dienenden Hohlraum der Membranhülse trennt, wird erreicht, daß das Fluid das Druckmeßgerät nicht berührt. Dies hat zur Folge, daß ein chemisch aggressives oder heißes oder verschmutztes Fluid das Druckmeßgerät nicht beschädigen oder seine Funktion beeinträchtigen kann. Je nach der Beschaffenheit des zu messenden Fluids kann die Membranhülse aus einem vom Fluid nicht angreifbaren Metall bestehen, z.B. aus Edelstahl.

Der Erfindung liegt die Aufgabe zu Grunde, den bekannten Rohrdruckmittler zu verbessern.

Diese Aufgabe ist durch die eingangs genannte Vorrichtung dadurch gelöst, daß der Membranteil mit mindestens einer sich über seine Länge erstreckenden Rille versehen ist. Bei dem durch das DE-GM 74 33 978 bekannten Rohrdruckmittler ist die Membranhülse im Querschnitt als regelmäßiges Vieleck ausgebildet. Durch diese Abweichung von der kreiszylindrischen Form wird erreicht, daß der Membranteil der bekannten Membranhülse den Druck des Fluids auf die Druckflüssigkeit durch einfaches Verformen des Membranteils übertragen kann. Der Erfinder hat jedoch erkannt, daß die Verformungsmöglichkeit des vieleckigen Membranteils einer Membranhülse sehr beschränkt ist, so daß die Meßempfindlichkeit des bekannten Rohrdruckmittlers verhältnismäßig gering ist. Dadurch, daß gemäß der Erfindung der Membranteil mindestens eine Rille aufweist, wird sowohl durch die Form als auch durch die Tiefe der Rille und gegebenenfalls durch die Anzahl mehrerer Rillen eine
in weiten Grenzen regelbare und erhöhte Verformbarkeit und
damit eine entsprechend verbesserte und erhöhte Meßempfindlichkeit erreicht. Die Rille hat eine ähnliche Wirkung
wie eine sich über die Länge des Membranteils erstreckende
Unterbrechung, d.h. der Membranteil kann sich durch Verbreiterung oder Verengung dieser Unterbrechung ausdehnen
oder zusammenziehen und so den im Meßraum herrschenden
Druck des Fluids über die im Druckraum befindliche Druckflüssigkeit auf das Druckmeßgerät übertragen. Allein
durch eine einzige Rille kann also erreicht werden, daß
sich fast die gesamte Oberfläche des Membranteils in
Abhängigkeit von dem im Meßraum herrschenden Druck ausdehnen oder zusammenziehen kann.

Gegenüber der bekannten Ausbildung des Membranteiles
als regelmäßiges Sechskant, bei dem sich lediglich die
einzelnen ebenen Flächen des Sechskantes nach innen oder
nach außen wölben können, ergibt sich durch die Erfindung
eine wesentlich größere Änderung des Volumens im Druckraum
bei gleichem Druckunterschied. Die Rille kann hierbei
sowohl radial nach außen als auch radial nach innen aus
der kreiszylindrischen Fläche geformt sein. Zur Bildung
dieser Rille kann z.B. ein Zylindersegment durch seine
Sehnenebene nach innen ausgebaucht werden, so daß die
nach innen ausgebauchte Rille im wesentlichen allein
durch Biegen der Wand des Membranteils entsteht, ohne
daß die Wand des Membranteils gestreckt werden muß.

Denkt man sich im zylindrischen Rohling des Membranteils
ein vielkantiges Prisma, dessen Kanten die Innenfläche
des zylindrischen Rohlings des Membranteils berühren,

- 4 -

dann können die durch die Seitenflächen dieses Prismas
begrenzten Zylindersegmente durch die Sehnenflächen bildenden Seitenflächen des gedachten Prismas nach innen eingestülpt
werden, so daß der Membranteil eine harmonikaartige Form
erhält, die durch die Vielzahl der Rillen besonders
leicht verformbar ist und so zu einer besonders hohen
Meßempfindlichkeit des Rohrdruckmittlers führt.

Bei einer weiteren vorteilhaften Ausführungsform der
Erfindung ist vorgesehen, daß die Wandstärke des Membranteils der Membranhülse kleiner ist als die Wandstärke
ihrer kreiszylindrischen Endstücke. Dies kann dadurch
erreicht werden, daß die in eine kreiszylindrische Fläche
nach innen eingeformten Rillen über das Maß des Einstülpens
verformt werden, so daß der Membranteil gestreckt und
dadurch seine Wandstärke verringert wird. Das gleiche
kann erreicht werden, wenn die Rillen in die kreiszylindrische Fläche eines Membranteilrohlings nach außen ausgeformt werden. Eine besonders starke Verdünnung der Wandstärke des Membranteils wird bei der harmonikaartigen
Ausbildung desselben erreicht. Diese Verringerung der
Wandstärke des Membranteils gegenüber den kreiszylindrischen Endstücken hat den Vorteil, daß die kreiszylindrischen Endstücke eine für eine einwandfreie Verbindung,
z.B. ein einwandfreies Verschweißen, mit den Endrändern
des Mantelhohlraumes geeignete Dicke aufweisen und der
Membranteil einen für die Meßempfindlichkeit wichtige
geringere Wandstärke erhält.

Werden die Rillen im Membranteil radial nach außen ausgeformt, dann ragen sie aus einer die kreiszylindrischen
Außenflächen der Endstücke der Membranhülse enthaltenden
gedachten Kreiszylinderfläche radial nach außen heraus,
so daß die Membranhülse in den Mantelhohlraum nur dann
eingeführt werden kann, wenn bei dem einen Ende des Mantels ein gegenüber seinem Innenraum verengter Endrand beim
Einführn der Membranhülse entfernt und erst nachträglich
mit dem Mantel verbunden, z.B. an diesen angeschweißt wird.

Um die Montage der erfindungsgemäßen Vorrichtung zu erleichtern, kann bei einer vorteilhaften Ausführungsform vorgesehen sein, daß die gedachte Kreiszylinderfläche, die die
kreiszylindrischen Außenflächen der Endstücke der Membranhülse enthält, den Membranteil höchstens teilweise berührend umhüllt. Dadurch wird erreicht, daß die Membranhülse
durch die Endränder des Mantelhohlraumes hindurch in
den Mantel eingeschoben und anschließend durch die Verbindung der Endränder des Mantelhohlraumes mit den Endstücken
der Membranhülse befestigt werden kann.

Durch die Rillen im Membranteil der Membranhülse wird
das Volumen des Druckraumes vergrößert. Da die Druckflüssigkeit in der Regel einen wesentlich höheren Wärmeausdehnungskoeffizienten hat als das Material, aus dem der Mantel und
die Membranhülse bestehen, entsteht eine erhöhte Abhängigkeit des zu übertragenden Druckes von der Temperatur. Um
diesen Einfluß des Unterschiedes des Wärmeausdehnungskoeffizienten möglichst klein zu halten, ist bei einer weiteren
vorteilhaften Ausbildung der erfindungsgemäßen Vorrichtung
vorgesehen, daß im Druckraum außer der Druckflüssigkeit
mindestens ein Füllkörper angeordnet ist, dessen Wärmeausdehnungskoeffizient kleiner ist als der der Druckflüssigkeit. Dadurch wird das Volumen des die Druckflüssigkeit
aufnehmenden Raumes und damit die Temperaturabhängigkeit
der Vorrichtung wesentlich verringert.

Bei einer weiteren vorteilhaften Ausführungsform kann
vorgesehen sein, daß die Endränder des Mantelhohlraumes
durch mit einem rohrförmigen Mittelteil des Mantels verbundene Anschlußstücke gebildet sind. Diese Ausbildung ergibt
die in der folgenden Beschreibung von in der Zeichnung
dargestellten Ausführungsbeispielen näher erläuterten
Wirkungen und Vorteile.

Die Erfindung ist in der folgenden Beschreibung von in
der Zeichnung dargestellten Ausführungsbeispielen eines
Rohrdruckmittlers gemäß der Erfindung im einzelnen beschrieben.

Es zeigen:

        Fig. 1    einen diametralen Längsschnitt durch
                  das Ausführungsbeispiel;

        Fig. 2    einen Schnitt nach der Linie II - II

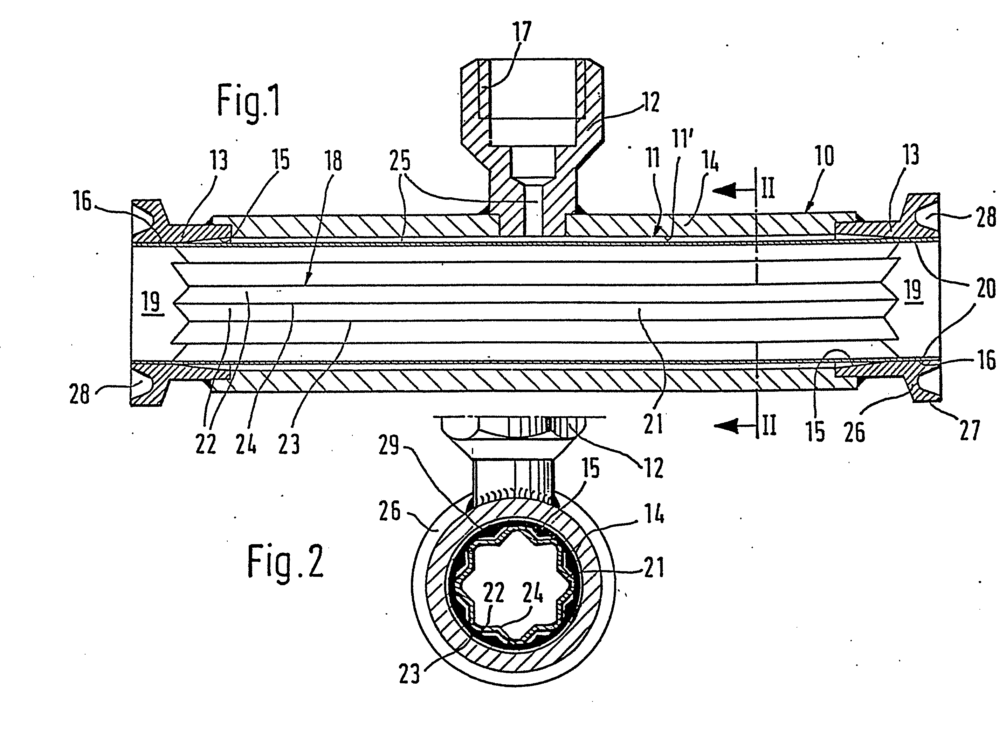

                  in Fig.1;

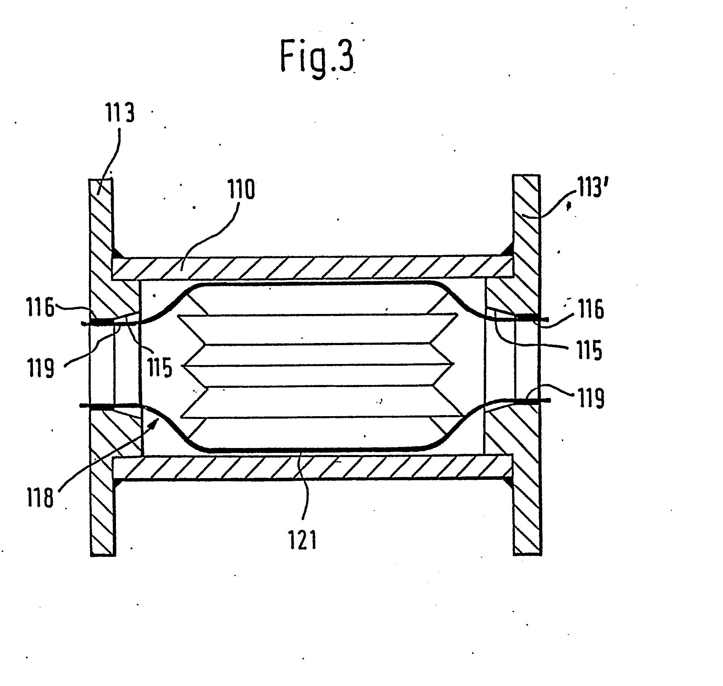

        Fig. 3    einen schematisch vereinfachten
                  diametralen Längsschnitt eines zweiten
                  Ausführungsbeispiels.

Der in den Fig. 1 und 2 dargestellte Rohrdruckmittler
weist einen als Ganzes mit 10 bezeichneten rohrförmigen
Mantel auf, dessen Hohlraum 11 mit dem Hohlraum eines
Anschlußstutzens 12 kommuniziert, der zum Anschluß eines
in der Zeichnung nicht dargestellten Druckmeßgerätes
dient.

Der Rohrdruckmittler ist dazu vorgesehen, den Druck eines
z.B. in einer in der Zeichnung nicht dargestellten Rohrleitung befindlichen, vorzugsweise durch diese strömenden
Mediums, z.B. eines Prozeßmediums, mittels des mit dem
Anschlußstutzen 12 verbundenen Druckmeßgerätes zu messen.
Zu diesem Zweck weist der Mantel 10 an seinen beiden
Enden Anschlüsse für die in einer Unterbrechung der Rohrleitung mündenden Leitungsenden auf. Diese Anschlüsse
sind bei dem dargestellten Ausführungsbeispiel durch
Anschlußstücke 13 gebildet, die mit den Enden eines kreiszylindrischen Mittelteiles 14 verbunden, z.B. an diesem angeschweißt sind oder mit diesem einen zusammenhängenden Teil bilden. Der Innenumfang eines jeden Anschlußstückes 13 bildet auf der mit dem Mittelteil 14 zu verbindenden Seite eine sich zum Mittelteil 14 hin erweiternde kegelstumpfförmige Übergangsfläche 15 und auf seiner Außenseite einen kreiszylindrischen Endrand 16 des Mantelhohlraumes 11. Der Durchmesser des Endrandes 16 ist kleiner als der Durchmesser des zylindrischen Innenraumes 11' des Mittelteiles 14. Der mit dem Mittelteil 14 fest verbundene Anschlußstutzen 12 ist mit einem Innengewinde 17 für den Anschluß des Druckmeßgerätes versehen.

Innerhalb des Mantels 10 ist eine sich über die ganze Länge des Mantels 10 erstreckende, als Ganzes mit 18 bezeichnete Membranhülse angeordnet, die aus einem Metall besteht, das von dem Fluid, dessen Druck gemessen werden soll, nicht angegriffen wird, vorzugsweise aus Edelstahl. Beide Enden der Membranhülse 18 sind als kreiszylindrische Endstücke 19 ausgebildet, die einen Außendurchmesser haben, der im wesentlichen dem Innendurchmesser der kreiszylindrischen Endränder 16 des Mantelhohlraumes 10 entspricht, so daß die Membranhülse 18 mit den Anschlußteilen 13 fest und dichtend verbunden, z.B. verschweißt werden kann. Der Membranteil 21 zwischen den beiden Endstücken 19 der Membranhülse 18 ist durch in das Innere einer gedachten kreiszylindrischen, die kreiszylindrischen Außenflächen der Endstücke 19 enthaltenden Kreiszylinderfläche eingeformte Rillen harmonikaartig geformt, wie das insbesondere aus Fig.2 ersichtlich ist. Beim dargestellten Ausführungsbeispiel besteht der harmonikaartig geformte Membranteil 21 aus im wesentlichen ebenen Streifen 22, die sich über die ganze Länge des Membranteils 18 zwischen einer äußeren Kante 23 und einer inneren

- 8 -

Kante 24 erstrecken.

Wie aus Fig.1 ersichtlich ist, wird der Innenraum 11
des Mantels in einen vom harmonikaartig geformten Membranteil umfaßten Meßraum für das Fluid und einen mit dem
Anschlußstutzen verbundenen Druckraum 25 für eine Druckflüssigkeit unterteilt, die den Druck des im Meßraum
befindlichen Fluids auf das Druckmeßgerät überträgt.

Die Anschlußstücke 13 sind an ihrem äußeren Ende mit
einer flanschartigen Erweiterung 26 versehen und dienen
dazu, an flanschartige Erweiterungen von Rohrenden einer
Unterbrechung der Leitung für das zu messende Fluid in
bekannter Weise angeklammert zu werden. Zur Aufnahme
eines Dichtringes ist in der Erweiterung 26 eine Ringnut
28 vorgesehen. Die Verbindung mit den genannten Rohrenden
der unterbrochenen Rohrleitung kann in jeder beliebigen,
für Rohrverbindungen bekannter Weise erfolgen, wozu dann
lediglich die Anschlußstücke 13 entsprechend auszubilden
sind.

Das Volumen des durch die harmonikaartige Ausbildung
des Membranteils 21 gebildeten Druckraumes 25 kann durch
einen Füllkörper 29 teilweise ausgefüllt werden, der
aus einem Stoff mit einem möglichst kleinen Wärmeausdehnungskoeffizienten besteht, so daß der Einfluß des Unterschiedes zwischen dem verhältnismäßig großen Wärmeausdehnungskoeffizienten der Druckflüssigkeit und demjenigen
der Wandung des Druckraumes 25 verringert.

- 9 -

Durch die harmonikaartige Ausbildung des Membranteils
21 wird erreicht, daß sich dieser, wie oben beschrieben,
sehr leicht verformen, nämlich radial ausdehnen und radial
verengen kann, so daß der auf das Druckmeßgerät zu übertragende Druck durch die Steifigkeit des Membranteils sehr
wenig beeinflußt wird.

Hierbei ist noch zu berücksichtigen, daß die harmonikaartige Ausbildung des Membranteils 21 einfach dadurch erreicht wird, daß in einen zylindrischen Rohling für die
Membranhülse die die harmonikaartige Form bildenden Rillen
durch Einstülpen der Wandung des Rohlinges gebildet werden.
Dies erkennt man, wenn man sich im zylindrischen Rohling
ein gedachtes vieleckiges Prisma denkt, dessen Kanten
die Innenwandung des Rohlings berühren. Man kann nun
die durch die Kanten des Prismas abgegrenzten konvexen
Zylindersegmente durch die ebenen, Sehnenflächen bildenden
Seiten des Prismas nach innen umstülpen.-Dieses im wesentlichen nur durch Biegen der Wandung des Membranteils
erreichte Umstülpen kann durch ein Eindrücken von tieferen
Rillen ersetzt werden, bei dem die Wandung des Membranteils
gestreckt wird. Dadurch wird die Wandstärke des Membranteils 21 gegenüber der Wandstärke der Endstücke 19 der
Membranhülse kleiner, so daß dadurch die Druckempfindlichkeit des Membranteils erhöht wird.

Durch dieses Strecken der Wandung des Membranteils wird
darüber hinaus noch der Vorteil erreicht, daß trotz der
durch die dünne Wandung erreichten Empfindlichkeit der
Membranhülse ihre Endstücke eine Wandstärke beibehalten,
die für das Verbinden mit den Endrändern des Mantelhohlraumes 11, z.B. durch Verschweißen, gut geeignet ist. Man
erhält also eine Membranhülse mit sehr dünnwandigem und
daher sehr druckempfindlichem Membranteil, die in ihren
Endstücken z.B. für das Zusammenschweißen ausreichend
dickwandig ist.

Bei einer in der Zeichnung nicht dargestellten Ausführungsform ist der Mantel 10 durchgehend als zylindrisches
Rohr mit gleichbleibendem Querschnitt ausgebildet. In
diesem Fall sind die Endstücke 19 der Membran 18 gegenüber
dem harmonikaartig geformten Wandteil erweitert. Eine
solche Ausbildung ist ohne Verringerung der Wandstärke
der Endstücke 19 möglich, wenn beim Formen des Membranteils
21 die zur Bildung der harmonikaartigen Form von außen
eingedrückten Rillen so tief sind, daß trotz des geringeren
größten Umfanges des Membranteils seine Wandstärke gleich
bleibt oder vorzugsweise verringert wird.

Bei den oben beschriebenen Ausführungsbeispielen ist
der Membranteil 21 der Membranhülse 18 dadurch gebildet,
daß in einen kreiszylindrischen Rohling von außen einander
benachbarte Rillen eingedrückt werden, z.B. dadurch,
daß in den Rohling ein aus zwei z.B. in der Mitte aneinanderstoßenden Teilen bestehender Kern eingeführt wird,
der mit sich über die beiden Hälften des Kernes innerhalb
des Membranteils erstreckenden axialen Rillen versehen
wird, in die durch Anwendung des Druckes eines Druckmittels
das Wandungsmaterial des Hülsenrohlings hineingedrückt wird.

Dadurch bleibt die Wandstärke des Rohlinges an den Endstücken erhalten, während sie bei ausreichend tiefen
Rillen des zweiteiligen Kernes gestreckt wird, so daß
der Membranteil eine geringere Wandstärke erhält. Anschließend werden dann die beiden Kernhälften in entgegengesetzte Richtung aus der so gebildeten Membranhülse
herausgezogen. Auf diese Weise erhält man eine Membranhülse, bei der der Membranteil sich innerhalb einer gedachten Kreiszylinderfläche befindet, die die kreiszylindrischen Außenflächen der Endstücke 19 der Membranhülse
enthält. Dadurch kann die Membranhülse in die oben beschriebenen, schon vorher fertiggestellten Mäntel, nämlich
den Mantel 10 mit den Anschlußstücken 13 oder in einen
insgesamt rohrförmigen Mantel axial eingeschoben werden.

In Fig.3 ist schematisch ein abgewandeltes Ausführungsbeispiel dargestellt. Bei diesem Ausführungsbeispiel sind
alle Teile, die dem Ausführungsbeispiel nach Fig.1 entsprechen, durch mit 100 vergrößerten Bezugszahlen bezeichnet,
so daß durch diesen Hinweis auf die Beschreibung des
Ausführungsbeispiels nach den Fig.1 und 2 Bezug genommen
wird.

Zur Vereinfachung der Darstellung ist der Anschlußstutzen
12 für das Druckmeßgerät in der Fig.3 nicht dargestellt.

Bei dieser Ausführungsform sind die axialen Rillen zur
Bildung des Membranteils 121 durch Anwendung des Druckes
eines Druckmittels auf die Innenfläche eines kreiszylindrischen Rohlinges gebildet, wobei dann die die Rillen enthaltende Form den Rohling von außen umgibt. Man erhält dadurch
eine Membranhülse 118, deren Membranteil 121 einen größeren
Umfang hat als ihre Endstücke 119.

Bei dieser Ausführungsform wird der Mantel 110 zuerst
mit einem Anschlußstück 113 versehen, das an den Mantel
110 angeschweißt ist. Dieses Anschlußstück 113 weist,
ebenso wie beim Ausführungsbeispiel nach Fig.1, einen
kreiszylindrischen inneren Endrand 116 auf, dem eine
kegelstumpfförmige Einführungsfläche 115 benachbart ist.
Dadurch kann die Membranhülse 118 in den Mantel 110 eingeführt und ihr Anschlußstück 119 mit dem kreiszylindrischen Endrand 116, z.B. durch Verschweißen, verbunden
werden. Anschließend wird dann ein zweites Endstück 113',
das ähnlich ausgebildet ist wie das Anschlußstück 113,
auf das andere Endstück 119 der Membranhülse 118 aufgesetzt
und zuerst mit dem Mantel 110 durch Schweißen verbunden.
Anschließend wird dann die Schweißverbindung mit dem
kreiszylindrischen Innenendrand 116 verbunden. Auch dieses
Anschlußstück 113' ist mit einer kegelstumpfförmigen
Einführungsfläche 115 versehen, die das Aufsetzen des
Anschlußstückes 113' auf das Endstück 119 erleichtert.

Bei den dargestellten Ausführungsbeispielen ist der Membranteil 21 bzw. 121 in verschiedener Weise harmonikaartig
ausgebildet. Eine verhältnismäßig empfindliche Membranhülse
kann jedoch auch dadurch erreicht werden, daß der Membranteil nur durch eine oder wenige im Abstand voneinander
befindliche axiale, nach innen oder nach außen eingedrückte
Rillen gebildet wird, durch die ein Membranteil entsteht,
der Druckänderungen elastisch nachgibt.

Im Zusammenhang mit der Beschreibung des Ausführungsbeispiels nach Fig.1 ist ein zusammenhängernder Füllkörper 29
beschrieben. Anstelle des zusammenhängenden Füllkörpers
können auch mehrere Füllkörper, z.B. in Form eines den
Druckraum teilweise füllenden Granulats, vorgesehen sein.

- 13 -

Alle in der vorstehenden Beschreibung erwähnten sowie
auch die nur allein aus der Zeichnung entnehmbaren Merkmale
sind als weitere Ausgestaltungen Bestandteile der Erfindung, auch wenn sie nicht besonders hervorgehoben und
insbesondere nicht in den Ansprüchen erwähnt sind.

# Patentanwälte

European Patent Attorneys

Patentanwälte · Lange Straße 51 · D-7000 Stuttgart 1

Phys. H. Bartels 42813
Dipl.-Ing. H. Fink
Dr.-Ing. M. Held

Zugelassene Vertreter
beim Europäischen Patentamt

Telefax Nr. (0-711)-228 7

- 01 -

Patentansprüche

1. Vorrichtung, an die ein Druckmeßgerät zum Messen des Druckes eines das Druckmeßgerät nicht berührenden Fluids anschließbar ist und die einen rohrförmigen Mantel (10) aufweist, dessen Hohlraum (11) mit dem Druckmeßgerät verbindbar ist und eine unrunde metallische Membranhülse (18, 118) aufnimmt, deren kreiszylindrische Endstücke (19, 119) an die kreiszylindrischen Innenflächen der beiden Endränder (16, 116) des Mantelhohlraumes (11) angepaßt und mit diesen dichtend verbunden sind, so daß der zwischen den Endstücken befindliche Membranteil (21, 121) der Membranhülse (18, 118) innerhalb des Mantels (10) einen mit dem Druckmeßgerät verbindbaren Druckraum (25) für eine Druckflüssigkeit von dem als Meßraum für das Fluid dienenden Hohlraum der Membranhülse (18, 118) trennt, dadurch gekennzeichnet, daß der Membranteil (21, 121) mit mindestens einer sich über seine Länge erstreckenden Rille versehen ist.

2. Vorrichtung nach Anspruch 1, dadurch gekennzeichnet, daß der Membranteil (21, 121) durch nebeneinander angeordnete Rillen harmonikaartig geformt ist.

3. Vorrichtung nach Anspruch 1 oder 2, dadurch gekennzeichnet, daß die Flanken der Rillen im wesentlichen ebene Streifen (22) sind, die miteinander Winkel bilden und sich im wesentlichen über die ganze Länge des Membranteils (21, 121) zwischen je einer äußeren und einer inneren Kante (23 bzw. 24) erstrecken.

Telefon (07 11) 29 63 10 u. 29 72 95
Telex 7 22 312 (patwo d)

Postscheck Stuttgart (BLZ 600 100 70) 448 42-704
Deutsche Bank Stuttgart (BLZ 600 700 70) 1167485

Telefonische Auskünfte und Aufträge sind
nur nach schriftlicher Bestätigung verbindlich.

4. Vorrichtung nach einem der Ansprüche 1 bis 3, dadurch gekennzeichnet, daß die Wandstärke des Membranteiles (21, 121) der Membranhülse (18, 118) kleiner ist als die Wandstärke ihrer kreiszylindrischen Endstücke (19,119).

5. Vorrichtung nach einem der Ansprüche 1 bis 4, dadurch gekennzeichnet, daß die gedachte Kreiszylinderfläche, die die kreiszylindrischen Außenflächen der Endstücke (19) der Membranhülse (18) enthält, den Membranteil (21) höchstens teilweise berührend umhüllt.

6. Vorrichtung nach einem der Ansprüche 1 bis 5, dadurch gekennzeichnet, daß im Druckraum (25) außer der Druckflüssigkeit mindestens ein Füllkörper (29) angeordnet ist, dessen Wärmeausdehnungskoeffizient kleiner ist als der der Druckflüssigkeit.

7. Vorrichtung nach einem der Ansprüche 1 bis 6, dadurch gekennzeichnet, daß die kreiszylindrischen Innenflächen der Endränder (16, 116) des Mantelhohlraumes (11) einen kleineren Durchmesser haben als die zwischen diesen Endrändern liegende Innenwandung des Mantels.

8. Vorrichtung nach Anspruch 7, dadurch gekennzeichnet, daß die Endränder (16, 116) des Mantelhohlraumes (11) durch mit einem rohrförmigen Mittelteil des Mantels verbundene Anschlußstücke (13, 113, 113') gebildet sind.

9. Vorrichtung nach Anspruch 8, dadurch gekennzeichnet, daß die Innenfläche des Mantelmittelteils kreiszylindrisch ist und die Innenflächen der Anschlußstücke (13, 113, 113') neben den kreiszylindrischen Innenflächen, die verengte Endränder (16, 116) des Mantelhohlraumes (11) bilden, an den dem Mantelmittelteil benachbarten Enden als kegelstumpfförmige Übergangsflächen (15, 115) ausgebildet sind.

Fig.1

Fig.2

½

0242813

Fig.3